# EUROPEAN PATENT SPECIFICATION

(11) **EP 3 438 577 B1**
(45) Date of publication and mention of the grant of the patent: **05.11.2025**
(21) Application number: 16901039.4
(22) Date of filing: 30.12.2016
(51) Int. Cl.: F25D 11/00, F25D 29/00

(54) **CONTROL METHOD AND CONTROL SYSTEM FOR IDENTIFYING ITEMS STORED IN AN INTELLIGENT REFRIGERATOR**
STEUERUNGSVERFAHREN UND STEUERUNGSSYSTEM ZUR IDENTIFIKATION VON IN EINEM INTELLIGENTEN KÜHLSCHRANK GELAGERTEN ARTIKELN
PROCÉDÉ DE COMMANDE ET SYSTÈME DE COMMANDE POUR L'IDENTIFICATION DES ARTICLES STOCKÉS DANS UN RÉFRIGÉRATEUR INTELLIGENT

(30) Priority: 06.05.2016 CN 201610302282
(43) Date of publication of application: 06.02.2019
(73) Proprietor: Qingdao Haier Joint Stock Co., Ltd, Qingdao, Shandong 266101 (CN)
(72) Inventor: WU, Yong, Qingdao Shandong 266101 (CN); DANG, Guangming, Qingdao Shandong 266101 (CN); ZHAO, Qinghai, Qingdao Shandong 266101 (CN); TANG, Ying, Qingdao Shandong 266101 (CN); ZHUO, Luqi, Qingdao Shandong 266101 (CN); WANG, Jie, Qingdao Shandong 266101 (CN)
(74) Representative: Ziebig Hengelhaupt Intellectual Property Attorneys Patentanwaltskanzlei PartGmbB
(86) International application number: PCT/CN2016/113927
(87) International publication number: WO 2017/190518

(56) References cited:
- EP-A1- 2 843 336
- EP-A1- 2 843 336
- WO-A1-2014/031976
- WO-A1-2016/036015
- CN-A- 103 604 271
- CN-A- 103 604 271
- CN-A- 103 604 273
- CN-A- 103 604 273
- CN-A- 104 197 632
- CN-A- 104 197 632
- CN-A- 104 896 868
- CN-A- 104 896 868
- CN-A- 105 953 520
- CN-A- 106 016 892
- JP-A- 2001 349 661
- JP-A- 2001 349 661
- KR-A- 20120 117 464
- KR-A- 20120 117 464

## Description

### Technical Field

The present invention relates to the field of household appliances, and in particular to a control method and a control system for identifying items stored in an intelligent refrigerator.

### Background of the Invention

The Internet of Things is another wave of global information following computer, Internet and mobile communication, which is a new stage of global information development. With the rise of the concept of the Internet of Things, the products of the household appliance industry are accelerating and intelligent, thereby launching a series of intelligent refrigerators.

The existing intelligent refrigerator usually uses a camera to collect images of items therein, classifies the items according to item identifiers corresponding to the images of the items, and then controls the temperature of the refrigerator to keep the items fresh, etc.

During the process of identifying the items by the camera, it is necessary to pre-set a database to hold the images of the items and the corresponding identifiers. In the existing refrigerator identification system, the database is usually established by the following methods:
before shipment of the refrigerator, a tester takes several photos, defines and marks a large amount of ingredients, then uploads the acquired data to the database, and further implants the database into the refrigerator of a client, and in order to ensure the accuracy of the later identification, the information about to-be-stored items in the database is very large. Therefore, a large amount of manpower and material resources are needed to build the database. Further, after the shipment of the refrigerator the database remains unchanged. Thus, as the technology advances, and as more and more heterogeneous items appear, the accuracy of identifying the items by the camera is greatly reduced. WO2014031976A1 relates to storage and inventory management of temperature sensitive pharmaceuticals.

### Summary of the Invention

An object of the present invention is to provide a control method and a control system for identifying items stored in the intelligent refrigerator.

The invention is set out in the appended set of claims.

The control method and control system for identifying items stored in the intelligent refrigerator of the present invention identifies image information about to-be-identified items based on the network and matches the image information about the to-be-identified items; and further, the network database is updated based on the data generated during the use of the refrigerator, and when new image information is generated again, it can be processed according to the updated network database. Thus, it is possible to increase the amount of data stored in the network database by means of the data fed back by a user-end refrigerator, thus ensuring the accuracy of the background food identification and further enhancing the user experience.

According to the detailed description of particular embodiments of the present invention below in conjunction with the accompanying drawings, the above and other purposes, advantages and features of the present invention will become more apparent for a person skilled in the art.

### Brief Description of the Drawings

Some of particular embodiments of the present invention will be described below in detail in an exemplary but not limiting way with reference to the accompanying drawings. The same reference signs indicate the same or similar components or parts in the accompanying drawings. It is understood by a person skilled in the art that the accompanying drawings are not necessarily drawn to scale. In the accompanying drawings:
Fig. 1 is a flow schematic diagram of a control method for identifying items stored in an intelligent refrigerator according to an embodiment of the present invention; and
Fig. 2 is a module schematic diagram of a control system for identifying items stored in an intelligent refrigerator according to an embodiment of the present invention.

### Detailed Description of the Invention

The present invention will be described below in detail in combination with the specific embodiments shown in the drawings. However, the embodiments are not intended to limit the present invention, and structures, methods, or functional changes made by a person skilled in the art in accordance with the embodiments are included in the scope of protection of the present invention.

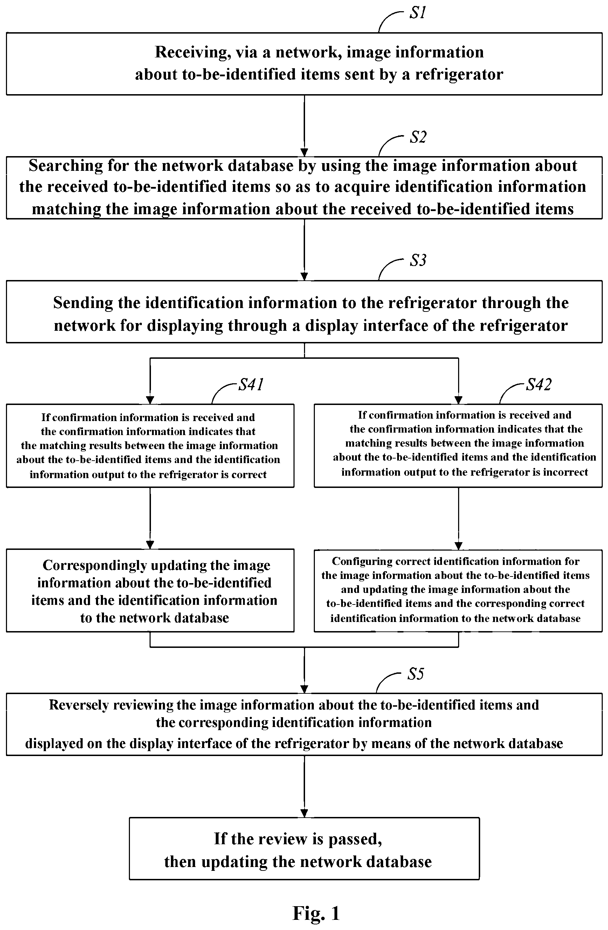

As shown in Fig. 1, the present invention provides a control method for identifying items stored in an intelligent refrigerator, the method comprising:
S1. receiving, via a network, image information about to-be-identified items sent by a refrigerator,
wherein the image information about the to-be-identified items is image information about the items stored in the refrigerator, which is usually acquired by a collection apparatus provided in the refrigerator, for example: a camera.

In order to prevent the refrigerator from being mishandled, a plurality of control buttons are usually disposed on the outside of the refrigerator. When the corresponding control button is activated, it is regarded as sending an identification signal, and the camera is activated to identify the image information about the items stored in the refrigerator. Of course, in other embodiments of the present invention, devices such as sensors may also be disposed on the refrigerator for issuing the identification signal. In a preferred embodiment of the present invention, when the door of the refrigerator is opened, it is regarded as sending an identification signal, which will not be described in detail herein.

It should be understood that each time the image collection apparatus works, the number and colour of the items acquired thereby may be different according to the installation position thereof and the change of the brightness of the light, for example: there may be one kind of item(s) on the image of the acquired item, or there may be a plurality of different kinds of items, which will not be described in detail herein.

The connection mode of the network is not specifically limited, for example: RFID, Bluetooth, WIFI, Internet, LAN and other connection modes.

Further, in an embodiment of the present invention, the method further comprises:
S2. searching for the network database by using the image information about the received to-be-identified items so as to acquire identification information matching the image information about the received to-be-identified items;
the network database comprises: attribute information about the item and the corresponding identification information.

The network database is stored in a cloud or a separate server, and the user-end refrigerator is connected to and exchanged with the network database via the network.

The data stored in the network database can be updated according to the operation of the user on a client refrigerator. Therefore, the initial data stored in the network database is not required to be very large, thereby saving manpower and material resource cost of building the database, which will be described in detail below.

The identification information is usually the name of the item.

In a preferred embodiment of the present invention, the step S2 specifically comprises:
pre-processing the image information by using contour detection technology and background segmentation technology to acquire a feature vector group of the image information, wherein the feature vector group comprises: the shape, colour, texture, etc. of the item;
searching the network database, and selecting, from a plurality of feature vector classes respectively corresponding to different items, a feature vector class having a maximum correlation between feature vectors corresponding to the image information about the to-be-identified items; and
assigning the identification information corresponding to the feature vector class having the maximum correlation to the image information corresponding to the to-be-tested items.

In general, each feature vector class includes multiple sets of feature vectors.

The similarity can be represented by a numerical value, which may be an average value, a median value, a weighted average value, etc. of the similarities of various individual feature vectors in the feature vector group.

For example: representing by the similarity using an average value of the similarity of each feature vector in the feature vector group.

Assuming that the feature vector group of the image information about the to-be-identified items is compared with the feature vector class in the network database 400 and both are searched, as for the to-be-identified item 1, the similarity of the corresponding colour is 90%, the shape similarity is 96%, the texture similarity is 93%, then the value of similarity is (90% + 96% + 93%) / 3 = 93%; and as for the to-be-identified item 2, the similarity of the corresponding colour is 50%, the shape similarity is 40%, and the texture similarity is 60%, then the value of similarity is (50% + 40% + 60%) / 3 = 50%, which will not be described in detail herein.

Further, in an embodiment of the present invention, the method further comprises:
S3. sending the identification information to the refrigerator through the network for displaying through a display interface of the refrigerator.

In this embodiment, in order to avoid generating more data during the interaction between the refrigerator and the network database, after the image information about the item is identified, the image information is directly sent to the network database for analysis, and simultaneously sent to the display interface of the refrigerator for displaying; and further, only the matched identification information analysed by the network database is returned to the refrigerator, and is further displayed on the display interface of the refrigerator.

In another embodiment of the present invention, matching the image information about the to-be-identified items and the identification information one by one and synchronously sending to the refrigerator for displaying through the display interface of the refrigerator.

Correspondingly, on the display interface of the refrigerator, the identification information is synchronously displayed in a display region of the image information; or in the form of a list, the image information and the corresponding identification information are matched and displayed one by one, which will not be described in detail herein.

In this embodiment, after the image information about the to-be-identified items is matched to the identification information, the image information about the to-be-identified items and the matched identification information are matched one by one and returned to the refrigerator at the same time, and displayed through the display interface of the refrigerator. Thus, when the received image information is the image information about a plurality of items, the user can more easily observe the matching relationship between the image information and the identification information.

Of course, there are many ways to display, such as: sub-regional display, list display, etc., which will not be described in detail here.

Further, in an embodiment of the present invention, the method further comprises:
S41. if confirmation information is received and the confirmation information indicates that the matching results between the image information about the to-be-identified items and the identification information output to the refrigerator is correct, correspondingly updating the image information about the to-be-identified items and the identification information to the network database.

In this embodiment, it is determined whether the matching results of the image information about the to-be-identified items and the identification information output to the display interface are correct; and in the matching results are correct, updating the acquired image information about the to-be-identified items and the identification information to the network database.

S42. if confirmation information is received and the confirmation information indicates that the matching results between the image information about the to-be-identified items and the identification information output to the refrigerator is incorrect, configuring correct identification information for the image information about the to-be-identified items and updating the image information about the to-be-identified items and the corresponding correct identification information to the network database.

In this embodiment, it is determined whether the matching results of the image information about the to-be-identified items and the identification information output to the display interface are incorrect; and if the matching results are incorrect, configuring correct identification information for the image information about the to-be-identified items and updating the image information about the to-be-identified items and the corresponding identification information to the network database.

The above steps S41 and S42 are selection relations, which will not be described in detail herein.

There are many ways to determine whether the matching results between the image information about the to-be-identified items and the identification information output to the display interface are correct;
In an embodiment of the present invention, whether the matching results of the image information and the identification information of the items output to the display interface of the refrigerator identified by means of user assistant are correct, and then the user operates the display interface to update the corresponding data.

In an embodiment of the present invention, a similarity threshold is set, and when the similarity between the feature vector group of the image information about the to-be-identified items and the feature vector class in the network database is greater than the similarity threshold, it is determined that the matching results of the image information about the to-be-identified items and the identification information output to the display interface are correct; otherwise the matching results are incorrect.

The similarity threshold is a fixed value, and a value range of the similarity threshold is usually between 50% and 100%.

In order to facilitate understanding, a specific example will be described below for understanding the present invention.

Assuming that the similarity threshold is 70%, then continue with the above example, if the similarity of the to-be-identified item 1 is greater than the similarity threshold pre-set by the system, it is determined that the matching results of the image information about the to-be-identified items and the identification information output to the display interface are correct; and if the similarity of the to-be-identified item 2 is smaller than the similarity threshold pre-set by the system, it is determined that the matching results of the image information about the to-be-identified items and the identification information output to the display interface are incorrect.

In this way, the data stored in the network database is actively expanded by means of the operation of the user-end refrigerator, thereby saving manpower and material resource cost of building the database.

In a preferred embodiment of the present invention, the method may further comprise:
S5. reversely reviewing the image information about the to-be-identified items and the corresponding identification information displayed on the display interface of the refrigerator by means of the network database, and if the review is passed, then updating the network database.

In a reverse reviewing process, querying the network database with the identification information, and acquiring a unique feature vector class corresponding to the identification information in the network database; and comparing the image information about the to-be-identified items with the feature vector class, and determining, by the comparison result, whether the image information about the to-be-identified items and the corresponding identification information can pass the reverse reviewing of the network database.

In a specific example of the present invention, in combination with the content of step S2, the image information about the to-be-identified items may also be preprocessed by using the contour detection technology and the background segmentation technology to acquire the feature vector group of the image information about the to-be-identified items., wherein the feature vector group comprises: the shape, colour, texture, etc. of the item.

Similarly, a reviewing similarity threshold is set, and when the similarity between the feature vector group of the image information about the to-be-identified items and the known feature vector class in the network database is greater than the similarity threshold, it is determined that the image information about the to-be-identified items and the identification information returned to the network database are reviewed, so that the user can be prevented from mishandling and then disturbing the network database.

The reviewing similarity threshold is also a fixed value, and a value range of the similarity threshold is usually between 50% and 100%.

### Under scene 1:

for example: a to-be-identified item is "tangerine". When picture information about the "tangerine" is received via the network, and after querying the network database, the identification information corresponding to the item is identified as "tangerine", and the picture information about the "tangerine" and the matched identification information is further sent to the refrigerator for displaying through a display interface of the refrigerator.

The picture information displayed on the display interface and the matched identification information have not been changed; at the same time, the network database is reversely queried with the identification information as the "orange", and after another comparison, the review is confirmed, and the picture information about the to-be-identified items and the identification information acquired at the time are updated to the network database.

### Under scene 2:

For example: a to-be-identified item is "tangerine". When picture information about the "tangerine" is received via the network, and after querying the network database, the identification information corresponding to the item is identified as "tangerine", and the picture information about the "tangerine" and the matched identification information is further sent to the refrigerator for displaying through a display interface of the refrigerator.

The picture information displayed on the display interface and the matched identification information have been changed, for example: the user mishandles and changes the identification information about the picture information corresponding to "orange" to "banana"; and further, the network database is reversely queried with the identification information as the "banana", and after another comparison, it can be confirmed that the changed data has not passed the review. At this time, in order to simplify the program and prevent entering an infinite loop, the corresponding data can be directly discarded.

### Under scene 3:

For example: a to-be-identified item is "tangerine". When picture information about the "tangerine" is received via the network, and after querying the network database, due to factors such as the change of the brightness of the light, etc., the collected picture information queries the database, and identifies that the identification information corresponding to the item was mistaken for "orange", and further sends the image information about the "orange" and the matched identification information to the refrigerator for display through the display interface of the refrigerator.

The picture information displayed on the display interface and the matched identification information have been changed, for example: changing the identification information about the picture information corresponding to "orange" from "orange" to "tangerine"; and further, the network database is reversely queried with the identification information as the "tangerine", and after another comparison, the modified data is confirmed to pass the review, and then the picture information about the to-be-identified items and the identification information acquired at the time are updated to the network database.

Of course, in other embodiments of the present invention, the number of times threshold may be set, and after the user end modifies the identification information given by the network database N times in a period of time, if N is greater than or equal to the number of times threshold, the user end is set as a malicious operation user end, and the user end is prohibited from making changes to the data for a certain period of time, which will not be described in detail herein.

Of course, in the technical field of the present invention, and by means of image comparison, there are many ways to determine the accuracy of data, which will not be listed one by one herein. In other preferred embodiments of the present invention, in order to reduce the amount of calculation, an update period of the network database may also be set, for example: 1 hour, 1 day, one week, etc., the administrator of the network database can also update regularly according to requirements. When the network database receives the corresponding update information, the corresponding update information is stored first, and then under the set update period, the data is updated together, and thus, the calculation amount is reduced, which will not be described in detail herein.

In addition, in an embodiment of the present invention, after the network database receives the data uploaded by the user end, the administrator of the network database may also assist in detecting the validity of the uploaded data, and then perform a corresponding update operation, which will not be described in detail herein.

Further, after receiving the image information via the network again, it can be processed according to the updated network database. Thus, it is possible to increase the amount of data stored in the network database by means of the data fed back by a user end, thus ensuring the accuracy of the background food identification.

It should be understood that the network database of the present invention is managed uniformly via the network, so that a better service can be provided according to the requirements from a customer, and at the same time, the push content can be added to the user-end refrigerator via the network database, thereby facilitating uniform management.

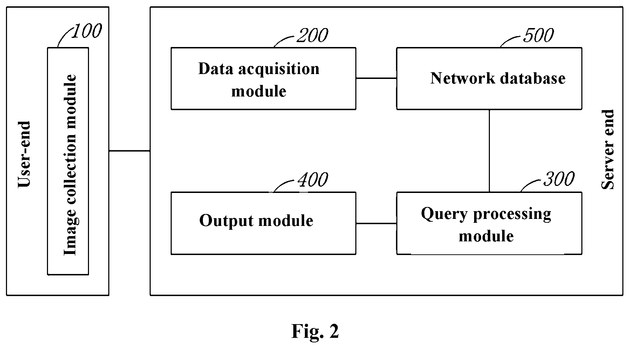

As shown in Fig.2, a control system for identifying items stored in an intelligent refrigerator according to an embodiment of the present invention comprises: a user end and a server end that performs network connection with user end; and the user end comprises: an image collection module 100 for collecting image information about the to-be-identified items. The server end comprises: a data acquisition module 200, a query processing module 300, an output module 400, and a network database 500.

The data acquisition module 200 is used for receiving, via a network, image information about to-be-identified items sent by a refrigerator;
wherein the image information about the to-be-identified items is image information about the items stored in the refrigerator, which is usually acquired by the image collection module 100 provided in the refrigerator, for example: a camera.

In order to prevent the refrigerator from being mishandled, a plurality of control buttons are usually disposed on the outside of the refrigerator. When the corresponding control button is activated, it is regarded as sending an identification signal, and the image collection module 100 is activated to identify the image information about the items stored in the refrigerator. Of course, in other embodiments of the present invention, devices such as sensors may also be disposed on the refrigerator for issuing the identification signal. In a preferred embodiment of the present invention, when the door of the refrigerator is opened, it is regarded as sending an identification signal, which will not be described in detail herein.

It should be understood that each time the image collection module 100 works, the number and colour of the acquired items may be different according to the installation position and the change of the brightness of the light, for example: there may be one kind of item(s) on the image of the acquired item, or there may be a plurality of different kinds of items, which will not be described in detail herein.

The connection mode of the network is not specifically limited, for example: RFID, Bluetooth, WIFI, Internet, LAN and other connection modes.

Further, in an embodiment of the present invention, the query processing module 300 is used for: searching for the network database 500 by using the image information about the received to-be-identified items so as to acquire identification information matching the image information about the received to-be-identified items; and
the network database 500 comprises: attribute information about the item and the corresponding identification information.

The network database 500 may be stored in a cloud or a separate server, and the user-end refrigerator is connected to and exchanged with the network database 500 via the network.

The data stored in the network database 500 can be updated according to the operation of the user on a client refrigerator. Therefore, the network database 500 may not store data or only store a small amount of data in an initial state, thereby saving manpower and material resource cost of building the database, which will be described in detail below.

The identification information is usually the name of the item.

In a preferred embodiment of the present invention, the query processing module 300 is specially used for:
preprocessing the image information by using contour detection technology and background segmentation technology to acquire a feature vector group of the image information, wherein the feature vector group comprises: the shape, colour, texture, etc. of the item;
searching the network database 500, and selecting, from a plurality of feature vector classes respectively corresponding to different items, a feature vector class having a maximum correlation between feature vectors corresponding to the image information about the to-be-identified items; and
assigning the identification information corresponding to the feature vector class having the maximum correlation to the image information corresponding to the to-be-tested items.

In general, each feature vector class includes multiple sets of feature vectors.

The similarity can be represented by a numerical value, which may be an average value, a median value, a weighted average value, etc. of the similarities of various individual feature vectors in the feature vector group.

For example: representing by the similarity using an average value of the similarity of each feature vector in the feature vector group.

Assuming that the feature vector group of the image information about the to-be-identified items is compared with the feature vector class in the network database 500 and both are searched, as for the to-be-identified item 1, the similarity of the corresponding colour is 90%, the shape similarity is 96%, the texture similarity is 93%, then the value of similarity is (90% + 96% + 93%) / 3 = 93%; and as for the to-be-identified item 2, the similarity of the corresponding colour is 50%, the shape similarity is 40%, and the texture similarity is 60%, then the value of similarity is (50% + 40% + 60%) / 3 = 50%, which will not be described in detail herein.

Further, in an embodiment of the present invention, the output module 400 is used for: sending the identification information to the refrigerator through the network for displaying through a display interface of the refrigerator.

In this embodiment, in order to avoid generating more data during the interaction between the user-end refrigerator and the network database 500, after the image information about the item is identified, the image information is directly sent to the network database 500 for analysis, and simultaneously sent to the display interface of the refrigerator for displaying; and further, only the matched identification information analysed by the network database 500 is returned to the refrigerator, and is further displayed on the display interface of the refrigerator.

In another embodiment of the present invention, the output module 400 is used for matching the image information about the to-be-identified items and the identification information one by one and synchronously sending to the refrigerator for displaying through the display interface of the refrigerator.

Correspondingly, on the display interface of the refrigerator, the identification information is synchronously displayed in a display region of the image information; or in the form of a list, the image information and the corresponding identification information are matched and displayed one by one, which will not be described in detail herein.

In this embodiment, after the image information about the to-be-identified items is matched to the identification information, the output module 400 matches the image information about the to-be-identified items and the matched identification information one by one and returns same to the refrigerator at the same time, and displayed through the display interface of the refrigerator. Thus, when the received image information is the image information about a plurality of items, the user can more easily observe the matching relationship between the image information and the identification information.

Of course, there are many ways to display, such as: sub-regional display, list display, etc., which will not be described in detail here.

Further, in an embodiment of the present invention, the query processing module 300 is further used for: if confirmation information is received and the confirmation information indicates that the matching results between the image information about the to-be-identified items and the identification information output to the refrigerator is correct, correspondingly updating the image information about the to-be-identified items and the identification information to the network database 500.

In this embodiment, it is determined whether the matching results of the image information about the to-be-identified items and the identification information output to the display interface are correct; and in the matching results are correct, updating the acquired image information about the to-be-identified items and the identification information to the network database 500.

The query processing module 300 is further used for: if confirmation information is received and the confirmation information indicates that the matching results between the image information about the to-be-identified items and the identification information output to the refrigerator is incorrect, configuring correct identification information for the image information about the to-be-identified items and updating the image information about the to-be-identified items and the corresponding correct identification information to the network database 500.

In this embodiment, it is determined whether the matching results of the image information about the to-be-identified items and the identification information output to the display interface are incorrect; and if the configuring results are incorrect, matching correct identification information for the image information about the to-be-identified items and updating the image information about the to-be-identified items and the corresponding identification information to the network database 500.

There are many ways to determine whether the matching results between the image information about the to-be-identified items and the identification information output to the display interface are correct;

In an embodiment of the present invention, whether the matching results of the image information and the identification information of the items output to the display interface of the refrigerator identified by means of user assistant are correct, and then the user operates the display interface to update the corresponding data.

In an embodiment of the present invention, a similarity threshold is set, and when the query processing module 300 determines that the similarity between the feature vector group of the image information about the to-be-identified items and the feature vector class in the network database 500 is greater than the similarity threshold, it is determined that the matching results of the image information about the to-be-identified items and the identification information output to the display interface are correct; otherwise the matching results are incorrect.

The similarity threshold is a fixed value, and a value range of the similarity threshold is usually between 50% and 100%.

In order to facilitate understanding, a specific example will be described below for understanding the present invention.

Assuming that the similarity threshold is 70%, then continue with the above example, if the similarity of the to-be-identified item 1 is greater than the similarity threshold pre-set by the system, it is determined that the matching results of the image information about the to-be-identified items and the identification information output to the display interface are correct; and if the similarity of the to-be-identified item 2 is smaller than the similarity threshold pre-set by the system, it is determined that the matching results of the image information about the to-be-identified items and the identification information output to the display interface are incorrect.

In this way, the data stored in the network database 500 is actively expanded by means of the operation of the user-end refrigerator, thereby saving manpower and material resource cost of building the database.

In a preferred embodiment of the present invention, the query processing module 300 is further used for: reversely reviewing the image information about the to-be-identified items and the corresponding identification information displayed on the display interface of the refrigerator by means of the network database 500, and if the review is passed, then updating the network database 500.

In a reverse reviewing process, the query processing module 300 queries the network database 500 with the identification information, acquiring a unique feature vector class corresponding to the identification information in the network database 500; and comparing the image information about the to-be-identified items with the feature vector class, and determining, by the comparison result, whether the image information about the to-be-identified items and the corresponding identification information can pass the reverse reviewing of the network database.

In a specific example of the present invention, the query processing module 300 may also preprocess the image information about the to-be-identified items by using the contour detection technology and the background segmentation technology to acquire the feature vector group of the image information about the to-be-identified items., wherein the feature vector group comprises: the shape, colour, texture, etc. of the item.

Similarly, a reviewing similarity threshold is set, and when the similarity between the feature vector group of the image information about the to-be-identified items and the known feature vector class in the network database is greater than the similarity threshold, it is determined that the image information about the to-be-identified items and the identification information returned to the network database are reviewed, so that the user can be prevented from mishandling and then disturbing the network database.

The reviewing similarity threshold is also a fixed value, and a value range of the similarity threshold is usually between 50% and 100%.

### Under scene 1:

For example: a to-be-identified item is "tangerine". When picture information about the "tangerine" is received via the network, and after querying the network database, the identification information corresponding to the item is identified as "tangerine", and the picture information about the "tangerine" and the matched identification information is further sent to the refrigerator for displaying through a display interface of the refrigerator.

The picture information displayed on the display interface and the matched identification information have not been changed; at the same time, the network database is reversely queried with the identification information as the "orange", and after another comparison, the review is confirmed, and the picture information about the to-be-identified items and the identification information acquired at the time are updated to the network database.

### Under scene 2:

For example: a to-be-identified item is "tangerine". When picture information about the "tangerine" is received via the network, and after querying the network database, the identification information corresponding to the item is identified as "tangerine", and the picture information about the "tangerine" and the matched identification information is further sent to the refrigerator for displaying through a display interface of the refrigerator.

The picture information displayed on the display interface and the matched identification information have been changed, for example: the user mishandles and changes the identification information about the picture information corresponding to "orange" to "banana"; and further, the network database is reversely queried with the identification information as the "banana", and after another comparison, it can be confirmed that the changed data has not passed the review. At this time, in order to simplify the program and prevent entering an infinite loop, the corresponding data can be directly discarded.

### Under scene 3:

For example: a to-be-identified item is "tangerine". When picture information about the "tangerine" is received via the network, and after querying the network database, due to factors such as the change of the brightness of the light, etc., the collected picture information queries the database, and identifies that the identification information corresponding to the item was mistaken for "orange", and further sends the image information about the "orange" and the matched identification information to the refrigerator for display through the display interface of the refrigerator.

The picture information displayed on the display interface and the matched identification information have been changed, for example: changing the identification information about the picture information corresponding to "orange" from "orange" to "tangerine"; and further, the network database is reversely queried with the identification information as the "tangerine", and after another comparison, the modified data is confirmed to pass the review, and then the picture information about the to-be-identified items and the identification information acquired at the time are updated to the network database.

Of course, in other embodiments of the present invention, the number of times threshold may be set, and after the user end modifies the identification information given by the network database N times in a period of time, if N is greater than or equal to the number of times threshold, the user end is set as a malicious operation user end, and the user end is prohibited from making changes to the data for a certain period of time, which will not be described in detail herein.

Of course, in the technical field of the present invention, and by means of image comparison, there are many ways to determine the accuracy of data, which will not be listed one by one herein.

In other preferred embodiments of the present invention, in order to reduce the amount of calculation, an update period of the network database 500 may also be set, for example: 1 hour, 1 day, one week, etc., the administrator of the network database 500 can also update regularly according to requirements. When the network database 500 receives the corresponding update information, the corresponding update information is stored first, and then under the set update period, the data is updated together, and thus, the calculation amount is reduced, which will not be described in detail herein.

In addition, in an embodiment of the present invention, after the network database 500 receives the data uploaded by the user end, the administrator of the network database 500 may also assist in detecting the validity of the uploaded data, and then perform a corresponding update operation, which will not be described in detail herein.

Further, after receiving the image information via the network again, it can be processed according to the updated network database 500. Thus, it is possible to increase the amount of data stored in the network database 500 by means of the data fed back by a user end, thus ensuring the accuracy of the background food identification.

It should be understood that the network database 500 of the present invention is managed uniformly via the network, so that a better service can be provided according to the requirements of a customer, and at the same time, the push content can be added to the user-end refrigerator via the network database 500, thereby facilitating uniform management.

In summary, the control method and control system for the intelligent refrigerator of the present invention identifies image information about to-be-identified items based on the network and matches the image information about the to-be-identified items; and further, the network database is updated based on the data generated during the use of the refrigerator, and when new image information is generated again, it can be processed according to the updated network database. Thus, it is possible to increase the amount of data stored in the network database by means of the data fed back by a user-end refrigerator, thus ensuring the accuracy of the background food identification and further enhancing the user experience.

## Claims

1. A control method for identifying items stored in an intelligent refrigerator, the control method executed by a server end in network connection with a user end provided at the refrigerator and comprising:
receiving (S1), via a network, image information about to-be-identified items sent by the refrigerator, wherein the image information about the to-be-identified items is image information about the items stored in the refrigerator, which is acquired by a collection apparatus provided in the refrigerator;
searching for (S2) a network database (500) by using the image information about the received to-be-identified items so as to acquire identification information matching the image information about the received to-be-identified items, wherein the network database is stored in a cloud or a separate server, and the refrigerator is connected to and exchanged with the network database via the network; and
sending (S3) the identification information to the refrigerator through the network for displaying through a display interface of the refrigerator, wherein only the matched identification information analysed by the network database is returned to the refrigerator, and is further displayed on the display interface of the refrigerator,
wherein the method further comprises:
if confirmation information is received from the refrigerator and the confirmation information indicates that the image information about the to-be-identified items matches the identification information output to the refrigerator, reversely reviewing the image information about the to-be-identified items and the corresponding identification information displayed on the display interface of the refrigerator by means of the network database (500), and if the review is passed, correspondingly updating (S41) the image information about the to-be-identified items and the identification information to the network database (500);
if confirmation information is received from the refrigerator and the confirmation information indicates that the image information about the to-be-identified items does not match the identification information output to the refrigerator,
configuring (S42) correct identification information for the image information about the to-be-identified items, reversely reviewing the image information about the to-be-identified items and the configured correct identification information by means of the network database (500), and if the review is passed, updating the image information about the to-be-identified items and the corresponding correct identification information to the network database (500), wherein the confirmation information is obtained by determining, at the refrigerator, whether the image information about the to-be-identified items matches the identification information output to the refrigerator.

2. The control method according to claim 1, wherein
after searching for the network database (500) by using the image information about the received to-be-identified items so as to acquire identification information matching the image information about the received to-be-identified items, the method further comprises:
matching the image information about the to-be-identified items and the identification information one by one and synchronously sending to the refrigerator for displaying through the display interface of the refrigerator.

3. A control system for identifying items stored in an intelligent refrigerator, the control system comprising a server end in network connection with a user end provided at the refrigerator;
a network database (500) stored in a cloud or a separate server;
a data acquisition module (200) configured to receive, via a network, image information about to-be-identified items sent by the refrigerator, wherein the image information about the to-be-identified items is image information about the items stored in the refrigerator, which is acquired by an image collection module (100) provided at the user end;
a query processing module (300) configured to search for the network database (500) by using the image information about the received to-be-identified items so as to acquire identification information matching the image information about the received to-be-identified items; and
an output module (400) configured to send the identification information to the refrigerator through the network for displaying through a display interface of the refrigerator, wherein only the matched identification information analysed by the network database is returned to the refrigerator, and is further displayed on the display interface of the refrigerator,
wherein the query processing module (300) is further configured to:
if confirmation information is received from the refrigerator and the confirmation information indicates that the image information about the to-be-identified items matches the identification information output to the refrigerator, reversely review the image information about the to-be-identified items and the corresponding identification information displayed on the display interface of the refrigerator by means of the network database (500), and if the review is passed, correspondingly update the image information about the to-be-identified items and the identification information to the network database (500);
if confirmation information is received from the refrigerator and the confirmation information indicates that the image information about the to-be-identified items does not match the identification information output to the refrigerator,
configure correct identification information for the image information about the to-be-identified items, reversely review the image information about the to-be-identified items and the configured correct identification information by means of the network database (500), and if the review is passed, update the image information about the to-be-identified items and the corresponding correct identification information to the network database (500), wherein the confirmation information is obtained by determining, at the refrigerator, whether the image information about the to-be-identified items matches the identification information output to the refrigerator.

4. The control system according to claim 3, wherein the output module (400) is further configured to:
match the image information about the to-be-identified items and the identification information one by one and synchronously send to the refrigerator for displaying through the display interface of the refrigerator.

## Patentansprüche

1. Steuerverfahren zum Identifizieren von in einem intelligenten Kühlschrank gelagerten Gegenständen, wobei das Steuerverfahren von einer Serverseite durchgeführt wird, die mit einer Benutzerseite in Netzwerkverbindung steht, die an dem Kühlschrank angeordnet ist, wobei das Steuerverfahren umfasst:
Empfangen (S1) von durch den Kühlschrank gesendeten Bildinformationen über die zu identifizierende Gegenstände über ein Netzwerk, wobei die Bildinformationen über die zu identifizierenden Gegenstände Bildinformationen über die in dem Kühlschrank gespeicherten Gegenstände sind, die von einer in dem Kühlschrank angeordneten Sammelvorrichtung erfasst werden;
Durchsuchen (S2) einer Netzwerkdatenbank (500) unter Verwendung der empfangenen Bildinformationen der zu identifizierenden Gegenstände, um Identifikationsinformationen zu erhalten, die mit den empfangenen Bildinformationen der zu identifizierenden Gegenstände übereinstimmen, wobei die Netzwerkdatenbank in einer Cloud oder einem separaten Server gespeichert ist und der Kühlschrank mit der Netzwerkdatenbank über ein Netzwerk verbunden ist und mit der Netzwerkdatenbank ausgetauscht wird; und
Senden (S3) der Identifikationsinformationen an den Kühlschrank über das Netzwerk zur Anzeige über eine Anzeigeschnittstelle des Kühlschranks, wobei nur die von der Netzwerkdatenbank analysierten passenden Identifikationsinformationen an den Kühlschrank zurückgegeben und ferner auf der Anzeigeschnittstelle des Kühlschranks angezeigt werden,
wobei das Verfahren ferner umfasst:
umgekehrtes Überprüfen der Bildinformationen über die zu identifizierenden Gegenstände und der entsprechenden Identifikationsinformationen, die auf der Anzeigeschnittstelle des Kühlschranks mittels der Netzwerkdatenbank (500) angezeigt werden, wenn Bestätigungsinformationen von dem Kühlschrank empfangen werden und die Bestätigungsinformationen anzeigen, dass die Bildinformationen über die zu identifizierenden Gegenstände mit den an den Kühlschrank ausgegebenen Identifikationsinformationen übereinstimmen, und entsprechendes Aktualisieren (S41) der Bildinformationen und der Identifikationsinformationen über die zu identifizierenden Gegenstände in die Netzwerkdatenbank (500), wenn die Überprüfung bestanden ist;
wenn eine Bestätigungsinformation vom Kühlschrank empfangen wird und die Bestätigungsinformation anzeigt, dass die Bildinformation über die zu identifizierenden Gegenstände nicht mit der an den Kühlschrank ausgegebenen Identifikationsinformation übereinstimmt,
Konfigurieren (S42) korrekter Identifizierungsinformationen für Bildinformationen der zu identifizierenden Gegenstände, Rücküberprüfen der Bildinformationen über die zu identifizierenden Gegenstände und der konfigurierten korrekten Identifizierungsinformationen durch die Netzwerkdatenbank (500) und Aktualisieren der Bildinformationen über die zu identifizierenden Gegenstände und der entsprechenden korrekten Identifizierungsinformationen in die Netzwerkdatenbank (500), wenn die Überprüfung bestanden ist, wobei die Bestätigungsinformation erhalten wird, indem am Kühlschrank bestimmt wird, ob die Bildinformationen über die zu identifizierenden Gegenstände mit den an den Kühlschrank ausgegebenen Identifikationsinformationen übereinstimmen.

2. Steuerverfahren nach Anspruch 1, wobei
nach Durchsuchen der Netzwerkdatenbank (500) unter Verwendung der Bildinformationen über die empfangenen zu identifizierenden Gegenstände, um Identifikationsinformationen zu erhalten, die den Bildinformationen über die empfangenen zu identifizierenden Gegenstände entsprechen, umfasst das Verfahren ferner:
Abgleichen der Bildinformationen über die zu identifizierenden Gegenstände und der Identifikationsinformationen nacheinander und synchrones Senden an den Kühlschrank zur Anzeige über die Anzeigeschnittstelle des Kühlschranks.

3. Steuerungssystem zum Identifizieren von in einem intelligenten Kühlschrank gelagerten Gegenständen, wobei das Steuerungssystem eine Serverseite umfasst, die mit einer Benutzerseite in Netzwerkverbindung steht, die an dem Kühlschrank angeordnet ist;
eine Netzwerkdatenbank (500), die in einer Cloud oder einem separaten Server gespeichert ist;
ein Datenerfassungsmodul (200), das konfiguriert ist, die durch den Kühlschrank gesendeten Bildinformationen über die zu identifizierende Gegenstände über ein Netzwerk zu empfangen, wobei die Bildinformationen über die zu identifizierenden Gegenstände Bildinformationen über die in dem Kühlschrank gespeicherten Gegenstände sind, die von einem Bilderfassungsmodul (100) erfasst werden, das auf der Benutzerseite bereitgestellt wird;
ein Abfrageverarbeitungsmodul (300), das konfiguriert ist, um unter Verwendung der Bildinformationen über die empfangenen zu identifizierenden Gegenstände nach der Netzwerkdatenbank (500) zu suchen, um Identifikationsinformationen zu erhalten, die den Bildinformationen über die empfangenen zu identifizierenden Gegenstände entsprechen; und
ein Ausgabemodul (400), das dafür konfiguriert ist, die Identifikationsinformationen an den Kühlschrank über das Netzwerk zu senden, um sie über eine Anzeigeschnittstelle des Kühlschranks anzuzeigen, wobei nur die von der Netzwerkdatenbank analysierten passenden Identifikationsinformationen an den Kühlschrank zurückgegeben und ferner auf der Anzeigeschnittstelle des Kühlschranks angezeigt werden,
wobei das Abfrageverarbeitungsmodul (300) ferner konfiguriert ist,
um die Bildinformationen über die zu identifizierenden Gegenstände und der entsprechenden Identifikationsinformationen, die auf der Anzeigeschnittstelle des Kühlschranks mittels der Netzwerkdatenbank (500) angezeigt werden, umgekehrt zu überprüfen, wenn Bestätigungsinformationen von dem Kühlschrank empfangen werden und die Bestätigungsinformationen anzeigen, dass die Bildinformationen über die zu identifizierenden Gegenstände mit den an den Kühlschrank ausgegebenen Identifikationsinformationen übereinstimmen, und um die Bildinformationen und der Identifikationsinformationen über die zu identifizierenden Gegenstände entsprechend in die Netzwerkdatenbank (500) zu aktualisieren, wenn die Überprüfung bestanden ist;
wenn eine Bestätigungsinformation vom Kühlschrank empfangen wird und die Bestätigungsinformation anzeigt, dass die Bildinformation über die zu identifizierenden Gegenstände nicht mit der an den Kühlschrank ausgegebenen Identifikationsinformation übereinstimmt,
um die korrekten Identifizierungsinformationen für Bildinformationen der zu identifizierenden Gegenstände zu konfigurieren, die Bildinformationen über die zu identifizierenden Gegenstände und der konfigurierten korrekten Identifizierungsinformationen durch die Netzwerkdatenbank (500) zu rücküberprüfen, und um die Bildinformationen über die zu identifizierenden Gegenstände und der entsprechenden korrekten Identifizierungsinformationen in die Netzwerkdatenbank (500) zu aktualisieren, wenn die Überprüfung bestanden ist, wobei die Bestätigungsinformation erhalten wird, indem am Kühlschrank bestimmt wird, ob die Bildinformationen über die zu identifizierenden Gegenstände mit den an den Kühlschrank ausgegebenen Identifikationsinformationen übereinstimmen.

4. Steuersystem nach Anspruch 3, wobei das Ausgabemodul (400) ferner konfiguriert ist,
um die Bildinformationen über die zu identifizierenden Gegenstände und der Identifikationsinformationen nacheinander abzugleichen und synchron an den Kühlschrank zu senden, um sie über die Anzeigeschnittstelle des Kühlschranks anzuzeigen.

## Revendications

1. Procédé de commande destiné à identifier des articles stockés dans un réfrigérateur intelligent, le procédé de commande étant exécuté par un terminal serveur en connexion réseau avec un terminal utilisateur prévu au niveau du réfrigérateur et comprenant :
la réception (S1), par l'intermédiaire d'un réseau, d'informations d'image concernant des articles à identifier envoyées par le réfrigérateur, dans lequel les informations d'image concernant les articles à identifier sont des informations d'image concernant les articles stockés dans le réfrigérateur, qui sont acquises par un appareil de collecte prévu dans le réfrigérateur ;
la recherche (S2) dans une base de données de réseau (500) à l'aide des informations d'image concernant les articles à identifier reçus afin d'acquérir des informations d'identification correspondant aux informations d'image concernant les articles à identifier reçus, dans lequel la base de données de réseau est stockée dans un infonuage ou un serveur séparé, et le réfrigérateur est connecté à et est échangé avec la base de données de réseau par l'intermédiaire du réseau ; et
l'envoi (S3) des informations d'identification au réfrigérateur par l'intermédiaire du réseau pour l'affichage par l'intermédiaire d'une interface d'affichage du réfrigérateur, dans lequel seules les informations d'identification correspondantes analysées par la base de données de réseau sont renvoyées au réfrigérateur et sont en outre affichées sur l'interface d'affichage du réfrigérateur,
dans lequel le procédé comprend en outre :
si des informations de confirmation sont reçues à partir du réfrigérateur et que les informations de confirmation indiquent que les informations d'image concernant les articles à identifier correspondent aux informations d'identification transmises au réfrigérateur, la révision inverse des informations d'image concernant les articles à identifier et des informations d'identification correspondantes affichées sur l'interface d'affichage du réfrigérateur au moyen de la base de données de réseau (500), et si la révision est réussie, la mise à jour (S41) correspondante des informations d'image concernant les articles à identifier et des informations d'identification dans la base de données de réseau (500) ;
si des informations de confirmation sont reçues à partir du réfrigérateur et que les informations de confirmation indiquent que les informations d'image concernant les articles à identifier ne correspondent pas aux informations d'identification transmises au réfrigérateur,
la configuration (S42) de informations d'identification correctes pour les informations d'image concernant les articles à identifier, la révision inverse des informations d'image concernant les articles à identifier et des informations d'identification correctes configurées au moyen de la base de données de réseau (500), et, si la révision est réussie, la mise à jour des informations d'image concernant les articles à identifier et des informations d'identification correctes correspondantes dans la base de données de réseau (500), dans lequel les informations de confirmation sont obtenues en déterminant, au niveau du réfrigérateur, si les informations d'image concernant les articles à identifier correspondent aux informations d'identification transmises au réfrigérateur.

2. Procédé de commande selon la revendication 1, dans lequel
après la recherche dans la base de données de réseau (500) à l'aide des informations d'image concernant les articles à identifier reçus afin d'acquérir des informations d'identification correspondant aux informations d'image concernant les articles à identifier reçus, le procédé comprend en outre :
la mise en correspondance des informations d'image concernant les articles à identifier et des informations d'identification une par une et l'envoi synchrone au réfrigérateur pour l'affichage par l'intermédiaire de l'interface d'affichage du réfrigérateur.

3. Système de commande destiné à identifier des articles stockés dans un réfrigérateur intelligent, le système de commande comprenant un terminal serveur en connexion réseau avec un terminal utilisateur prévu au niveau du réfrigérateur ;
une base de données de réseau (500) stockée dans un infonuage ou un serveur séparé ;
un module d'acquisition de données (200) configuré pour recevoir, par l'intermédiaire d'un réseau, des informations d'image concernant des articles à identifier envoyées par le réfrigérateur, dans lequel les informations d'image concernant les articles à identifier sont des informations d'image concernant les articles stockés dans le réfrigérateur, qui sont acquises par un module de collecte d'image (100) prévu au niveau du terminal utilisateur ;
un module de traitement de requête (300) configuré pour effectuer une recherche dans la base de données de réseau (500) à l'aide des informations d'image concernant les articles à identifier reçus afin d'acquérir des informations d'identification correspondant aux informations d'image concernant les articles à identifier reçus ; et
un module de sortie (400) configuré pour envoyer les informations d'identification au réfrigérateur par l'intermédiaire du réseau pour l'affichage par l'intermédiaire d'une interface d'affichage du réfrigérateur, dans lequel seules les informations d'identification correspondantes analysées par la base de données de réseau sont renvoyées au réfrigérateur et sont en outre affichées sur l'interface d'affichage du réfrigérateur,
dans lequel le module de traitement de requête (300) est en outre configuré pour :
si des informations de confirmation sont reçues à partir du réfrigérateur et que les informations de confirmation indiquent que les informations d'image concernant les articles à identifier correspondent aux informations d'identification transmises au réfrigérateur, réviser inversement les informations d'image concernant les articles à identifier et les informations d'identification correspondantes affichées sur l'interface d'affichage du réfrigérateur au moyen de la base de données de réseau (500), et si la révision est réussie, mettre à jour en conséquence les informations d'image concernant les articles à identifier et les informations d'identification dans la base de données de réseau (500) ;
si des informations de confirmation sont reçues à partir du réfrigérateur et que les informations de confirmation indiquent que les informations d'image concernant les articles à identifier ne correspondent pas aux informations d'identification transmises au réfrigérateur,
configurer des informations d'identification correctes pour les informations d'image concernant les articles à identifier, réviser inversement les informations d'image concernant les articles à identifier et les informations d'identification correctes configurées au moyen de la base de données de réseau (500), et, si la révision est réussie, mettre à jour les informations d'image concernant les articles à identifier et les informations d'identification correctes correspondantes dans la base de données de réseau (500), dans lequel les informations de confirmation sont obtenues en déterminant, au niveau du réfrigérateur, si les informations d'image concernant les articles à identifier correspondent aux informations d'identification transmises au réfrigérateur.

4. Système de commande selon la revendication 3, dans lequel le module de sortie (400) est en outre configuré pour :
faire correspondre les informations d'image concernant les articles à identifier et les informations d'identification une par une et envoyer de manière synchrone au réfrigérateur pour l'affichage par l'intermédiaire de l'interface d'affichage du réfrigérateur.
